(19) **Europäisches Patentamt**
**European Patent Office**
**Office européen des brevets**

(11) **EP 4 651 361 A1**

(12) **EUROPEAN PATENT APPLICATION**

(43) Date of publication:
**19.11.2025  Bulletin 2025/47**

(21) Application number: **24175697.2**

(22) Date of filing: **14.05.2024**

(51) International Patent Classification (IPC):
**H02P 6/18** *(2016.01)*    **H02P 6/08** *(2016.01)*
**H02P 8/12** *(2006.01)*    **H02P 21/00** *(2016.01)*
**H02P 21/13** *(2006.01)*    **H02P 21/22** *(2016.01)*

(52) Cooperative Patent Classification (CPC):
**H02P 6/08; H02P 6/18; H02P 8/12; H02P 21/0003;
H02P 21/13; H02P 21/22**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Melexis Technologies NV
3980 Tessenderlo-Ham (BE)**

(72) Inventors:
• **LAMBRECHTS, Marc
3980 Tessenderlo (BE)**
• **MOONS, Marnix
3980 Tessenderlo (BE)**

(74) Representative: **Winger
Mouterij 16 bus 101
3190 Boortmeerbeek (BE)**

(54) **DYNAMIC MOTOR COIL CONTROL METHOD**

(57)    A method for controlling a motor comprising a rotor and a stator, the stator comprising a plurality of coils which are isolated from each other. The method includes applying a dynamically adjustable sinusoidal current to every motor coil, obtaining an electrical parameter for each motor coil, which is either an average voltage over the coil or an instantaneous voltage over the coil, and utilizing a feedback-based vector control algorithm. This algorithm receives the electrical parameter and the applied sinusoidal current for each motor coil to calculate a target current vector, which is determined based on the electrical parameter and the applied sinusoidal current for each motor coil. The method further involves dynamically adjusting for each motor coil the sinusoidal current applied to that motor coil based on the target current vector.

FIG. 1

## Description

**Field of the invention**

The present invention relates to the field of motor control systems, specifically to methods and devices for controlling the operation of motors.

**Background of the invention**

In the realm of motor control, particularly for applications involving stepper motors and brushless DC (BLDC) motors, the quest for efficiency, precision, and reliability is ongoing. The traditional approach to controlling these motors involves open-loop systems or basic closed-loop systems that do not fully exploit the potential of modern electronics and control theory to optimize motor performance.

One of the primary challenges in this field is the dynamic control of motor speed, torque, and position with high precision and efficiency. In conventional systems, the control strategies often rely on fixed parameters and do not adapt in real-time to changes in load or desired performance outcomes. This can lead to suboptimal motor performance, including excessive energy consumption, inadequate torque production, or insufficient control over motor speed and position. Furthermore, these traditional control methods may not adequately compensate for inherent motor characteristics or external disturbances, leading to decreased reliability and increased wear on the motor and associated mechanical components.

Another significant challenge is the detection and prevention of motor stalls and the accurate estimation of the motor's rotor position. In many applications, the ability to detect a stall condition promptly and accurately estimate the rotor position without the need for additional sensors can significantly enhance the system's overall performance and reliability. However, traditional control methods often struggle to provide this level of performance, especially in dynamically changing operating conditions.

Moreover, the acoustic noise and heat generation associated with motor operation are of concern in many applications. Reducing these factors not only improves the user experience but also contributes to the longevity and reliability of the motor and the device it powers. Traditional motor control techniques, however, often fail to address these issues effectively, leading to louder operation and higher temperatures than necessary.

Despite advancements in motor control technology, including the development of more sophisticated open-loop and closed-loop control systems, there remains a significant need for further innovation. The challenges of optimizing motor performance, improving energy efficiency, reducing acoustic noise and heat generation, and enhancing reliability and responsiveness under varying operating conditions are still prominent. Therefore, the field of motor control continues to seek advancements that can address these challenges, paving the way for more efficient, reliable, and high-performing motor control systems.

**Summary of the invention**

It is an object of embodiments of the present invention to enhance the dynamic response, energy efficiency, and/or stall detection of motors by dynamically regulating the sine current frequency and/or amplitude and/or phase for each coil based on obtained coil voltages. This objective is accomplished by a method for controlling a motor involving the application of a dynamically adjustable sinusoidal current to each motor coil, and the use of a feedback-based vector control algorithm to calculate the target current vector and adjust the current applied to each coil based on the calculated target current vector according to the invention.

In the first aspect, the present invention relates to a method for controlling a motor comprising a rotor and a stator, the stator comprising a plurality of coils which are isolated from each other, the method comprising:

- applying a sinusoidal current to every motor coil, wherein the sinusoidal current is dynamically adjustable;
- obtaining an electrical parameter for each motor coil, wherein for each motor coil the electrical parameter is an average voltage over the coil or an instantaneous voltage over the coil;
- utilizing a feedback-based vector control algorithm that receives the electrical parameter and the applied sinusoidal current for each motor coil to calculate a target current vector, wherein the target current vector is determined based on the electrical parameter and the applied sinusoidal current for each motor coil;
- dynamically adjusting for each motor coil the sinusoidal current applied to that motor coil based on the target current vector.

In embodiments of the present invention the average voltage may be measured over a modulation cycle when the current is applied by modulation. This allows accurate voltage measurement synchronized with the current modulation.

In embodiments of the present invention the method may further comprise the step of estimating the rotor position based on the calculated target current vector and the obtained voltage and using the estimated rotor position for converting the target current vector into target current values for each coil. This enables precise rotor position tracking for optimal current control.

In embodiments of the present invention the feedback-based vector control algorithm may furthermore use predefined motor parameters for calculating the target current vector. Utilizing known motor characteristics improves the accuracy of the current vector calculation.

In embodiments of the present invention dynamically adjusting the sinusoidal current for each motor coil may comprise dynamically adjusting the amplitude, and/or the phase, and/or the frequency of the sinusoidal current based on the target current vector. This allows real-time optimization of the motor current for the desired performance.

In the second aspect, the present invention relates to a motor control device for controlling a motor comprising a rotor and a stator, the stator comprising a plurality of coils which are isolated from each other comprising:

- a current controller configured for applying a sinusoidal current to every motor coil, wherein the sinusoidal is dynamically adjustable;
- a feedback module configured for obtaining an electrical parameter for each motor coil, wherein for each motor coil the electrical parameter is an average voltage over the coil or an instantaneous voltage over the coil;
- a control module configured for executing a feedback-based vector control algorithm that receives the electrical parameter and the applied sinusoidal current for each motor coil to calculate a target current vector based on the electrical parameter and the applied sinusoidal current for each motor coil, and for dynamically adjusting for each motor coil the sinusoidal current applied to that motor coil based on the target current vector.

In embodiments of the present invention the feedback module may be configured for obtaining the average voltage by averaging the voltage over a modulation cycle when the current is applied by modulation. This provides an effective way to measure the coil voltage.

In embodiments of the present invention the control module may be furthermore configured for estimating the rotor position based on the calculated target current vector and the obtained voltage and using the estimated rotor position for converting the target current vector into target current values for each coil. Incorporating rotor position estimation enhances the dynamic performance of the motor control.

In embodiments of the present invention the control module may use predefined motor parameters for calculating the target current vector. Leveraging motor specifications enables more precise current control.

In embodiments of the present invention the control module may be configured for dynamically adjusting the amplitude, and/or the phase, and/or the frequency of the sinusoidal current based on the target current vector. This allows the current to be optimized in real-time for the desired motor operation.

In the third aspect, the present invention relates to a motor control system, the motor control system comprising:

- a motor comprising a rotor and a stator, the stator comprising a plurality of coils which are isolated from each other,
- and a motor control device according to any embodiments of the second aspect.

In embodiments of the present invention the motor may be a stepper motor. The disclosed control method is well-suited for precise positioning control of stepper motors.

In embodiments of the present invention the motor may be a bipolar stepper motor. Bipolar stepper motors benefit from the enhanced current control provided by the invention.

In embodiments of the present invention the motor may be a brushless DC motor. The vector control algorithm can optimize the performance of BLDC motors.

In embodiments of the present invention the motor may be a 3-phase brushless DC motor.

It is an advantage of embodiments of the present invention that a method for dynamically adjusting the sinusoidal current applied to each motor coil based on a calculated target current vector can be achieved, allowing for precise control over the motor's operational parameters such as speed, and/or torque, and/or energy efficiency. It is a further advantage of embodiments of the present invention that obtaining the electrical parameters, including average or instantaneous voltage across motor coils, enables a feedback-based vector control algorithm to accurately calculate the target current vector. Additionally, it is an advantage of embodiments of the present invention that the use of predefined motor parameters, such as phase resistance and phase inductance, in the feedback-based vector control algorithm allows for a more accurate determination of the target current vector, optimizing the motor's performance. Moreover, it is an advantage of embodiments of the present invention that the capability to dynamically adjust the amplitude, phase, or frequency of the applied sinusoidal current based on the target current vector facilitates the achievement of desired operational states, including specific motor speeds, torque levels, and improved energy efficiency. Furthermore, it is an advantage of embodiments of the present invention that the inclusion of a control module comprising a microchip with embedded software for executing the feedback-based control algorithm simplifies the implementation of complex control strategies, making it more accessible for various applications. In alternative embodiments of the present invention in stead of performing the functions by embedded software, they may be hard coded. This is a so called state machine based solution. Both alternatives are equivalent. It is also an advantage of embodiments of the present invention that the feedback module, equipped with sensors for measuring electrical parameters of the motor coils, supports the accurate execution of the feedback-based vector control algorithm by providing reliable data. Another advantage of embodiments of the present invention is that the motor control device may include a user interface for setting desired operational states, offering user-friendly interaction with the control system. Lastly, it is an advantage of embodiments of the present invention that a filtering process applied to the obtained electrical parameter and/or to the amplitude and/or the phase of the applied sinusoidal current reduces noise and improves the accuracy of the target current vector calculation, further enhancing the motor control system's overall performance.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1 is a flow chart of an exemplary method for controlling a motor according to embodiments of the present invention.
FIG. 2 is a schematic diagram of a motor control device and a motor control system according to embodiments of the present invention.
FIG. 3 is an exemplary flow chart illustrating a first exemplary method for obtaining a target current vector utilizing a feedback-based vector control algorithm according to embodiments of the present invention.
FIG. 4 is an exemplary flow chart illustrating a second exemplary method for obtaining a target current vector utilizing a feedback-based vector control algorithm according to embodiments of the present invention.
FIG. 5 is a schematic drawing of a bipolar stepper motor which can be controlled using a method or device according to embodiments of the present invention.
FIG. 6 shows the sinusoidal current signals through the coils of the bipolar stepper motor of FIG. 5 using a current controller of a motor control device according to embodiments of the present invention.
FIG. 7 is a schematic drawing of a BLDC motor which can be controlled using a method or device according to embodiments of the present invention.

Any reference signs in the claims shall not be construed as limiting the scope.
In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "sinusoidal current" refers to an electric current that varies in time with the form of a sine wave. Examples of sinusoidal currents include, but are not limited to, currents with a single sine wave form, currents with multiple superimposed sine waves of different frequencies, and currents with a fundamental sine wave and additional harmonic components.

As used herein, and unless otherwise specified, the term "electrical parameter" refers to a measurable property or characteristic of an electrical system or component. Examples of electrical parameters include, but are not limited to, voltage, current, resistance, capacitance, inductance, power, frequency, and phase.

As used herein, and unless otherwise specified, the term "feedback-based vector control algorithm" refers to a control algorithm that utilizes feedback from obtained system parameters to calculate and adjust control outputs in a vector space. Examples of feedback-based vector control algorithms include, but are not limited to, field-oriented control (FOC), direct torque control (DTC), and space vector modulation (SVM) based control.

As used herein, and unless otherwise specified, the term "target current vector" refers to a desired or reference current value expressed in a vector space, typically representing the magnitude and phase of the desired current.

As used herein, and unless otherwise specified, the term "modulation cycle" refers to a complete period of a modulation waveform used to apply current to the motor coils. Examples of modulation cycles include, but are not limited to, pulse width modulation (PWM) cycles.

As used herein, and unless otherwise specified, the term "predefined motor parameters" refers to known or measured characteristics of the motor that are used in the control algorithm. Examples of predefined motor parameters include, but are not limited to, coil resistance, coil inductance.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In the first aspect, the present invention relates to a method for controlling a motor comprising a rotor (210) and a stator (220), the stator (220) comprising a plurality of coils (221) which are isolated from each other, the method comprising:

- applying (110) a sinusoidal current to every motor coil, wherein the sinusoidal current is dynamically adjustable
- obtaining (120) an electrical parameter for each motor coil, wherein for each motor coil the electrical parameter is an average voltage over the coil or an instantaneous voltage over the coil;
- utilizing (130) a feedback-based vector control algorithm that receives the electrical parameter and the applied sinusoidal current for each motor coil to calculate a target current vector, wherein the target current vector is determined based on the electrical parameter and the applied sinusoidal current for each motor coil;
- dynamically adjusting (140) for each motor coil the sinusoidal current applied to that motor coil based on the target current vector.

In embodiments of the present invention the sinusoidal current has a dynamically adjustable frequency and/or amplitude and/or phase.

In embodiments of the present invention the sinusoidal current is dynamically adjusted based on the target current vector to achieve a desired operational state. The desired operational state may for example include at least one of a specific motor speed, a specific motor torque, a specific motor efficiency.

In embodiments of the present invention utilizing the applied sinusoidal current to calculate a target current vector implies that the amplitude and/or phase of the applied sinusoidal current are used.

In embodiments of the present invention the feedback-based vector control algorithm further comprises transforming the obtained electrical parameter and the applied sinusoidal current into a format suitable for calculating the target current vector, and adjusting the sinusoidal current signal includes modulating the frequency and/or amplitude and/or phase of the current signal in real-time based on the target current vector. It is an advantage of embodiments of the present invention that by using the feedback-based vector control algorithm, the motor will be able to change its speed faster. It is an advantage of embodiments of the present invention that the energy consumption of the motor can be reduced and that the motor responsiveness and reliability can be increased.

In embodiments of the present invention a modulation cycle corresponds to 1 full PWM period (e.g. 50 μs when having 20 kHz).

In embodiments of the present invention a filtering process may be applied to the obtained electrical parameter and/or to the amplitude and/or the phase of the applied sinusoidal current to reduce noise and improve the accuracy of the target current vector calculation.

In embodiments of the present invention the predefined motor parameters used in the feedback-based vector control algorithm are the coil resistance and/or coil inductance.

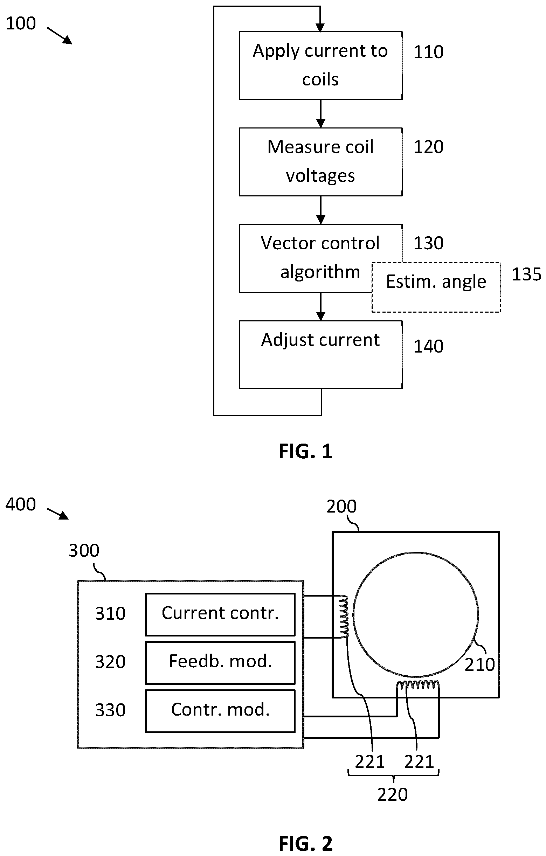

FIG. 1 shows a flow chart of an exemplary method (100) for controlling a motor (200) comprising a rotor (210) and a stator (220), the stator (220) comprising a plurality of coils (221) which are isolated from each other. The method (100) includes applying (110) a sinusoidal current to every motor coil, wherein the sinusoidal current is dynamically adjustable. An electrical parameter is obtained (120) for each motor coil, wherein for each motor coil the electrical parameter is an average voltage over the coil or an instantaneous voltage over the coil. In embodiments of the present invention the average voltage may be obtained by measuring over a modulation cycle when the current is applied by modulation. This allows accurate voltage measurement synchronized with the current modulation. The method (100) utilizes (130) a feedback-based vector control algorithm that receives the electrical parameter and the applied sinusoidal current for each motor coil to calculate a target current vector, wherein the target current vector is determined based on the electrical parameter and the applied sinusoidal current for each motor coil. In embodiments of the present invention the method may further comprise the step of estimating (135) the rotor position based on the calculated target current vector and the obtained voltage and using the estimated rotor position for converting the target current vector into target current values for each coil (221). This enables precise rotor position tracking for optimal current control. In embodiments of the present invention the feedback-based vector control algorithm may furthermore use predefined motor parameters for calculating the target current vector. Utilizing known motor characteristics improves the accuracy of the current vector calculation. The sinusoidal current applied to each motor coil is then dynamically adjusted (140) based on the target current vector. In embodiments of the present invention dynamically adjusting (140) the sinusoidal current for each motor coil may comprise dynamically adjusting the amplitude, and/or the phase, and/or the frequency of the sinusoidal current based on the target current vector. This allows real-time optimization of the motor current for the desired performance.

While the current is applied to all the motor coils, the average or instantaneous voltage over every coil needs to be known. When the voltage is modulated, the average voltage over a full modulation cycle needs to be known. When the voltage is analog, the instantaneous voltage needs to be known. In embodiments of the present invention the current controller (310- which is configured to apply a sinusoidal current to every motor coil may do so by applying a certain voltage or duty cycle on every motor coil. The applied voltage or duty cycle (which is representative for the applied voltage) may be passed by the feedback module (320) from the current controller (310) to the control module (330). In that case the feedback module (320) is configured for obtaining the electrical parameter from the current controller (310) and passing it to the control module (330). When this isn't the case, the feedback module (320) may be configured for measuring the electrical parameter, wherein for each motor coil the electrical parameter is an average voltage over the coil or an instantaneous voltage over the coil.

In embodiments of the present invention for every coil, there is a known current setpoint and an obtained voltage. This information is used together with the motor parameters to perform a FOC algorithm. The FOC algorithm calculates the desired target current vector, which can be applied to every coil after a transformation.

In the second aspect, the present invention relates to a motor control device (300) for controlling a motor (200) comprising a rotor (210) and a stator (220), the stator (220) comprising a plurality of coils (221) which are isolated from each other. The motor control device comprises:

- a current controller (310) configured for applying (110) a sinusoidal current to every motor coil, wherein the sinusoidal current is dynamically adjustable;
- a feedback module (320) configured for obtaining (120) an electrical parameter for each motor coil, wherein for each motor coil the electrical parameter is an average voltage over the coil or an instantaneous voltage over the coil, and wherein the feedback module (320) may comprise sensors for measuring electrical parameters of the motor coils (221);
- a control module (330) configured for executing a feedback-based vector control algorithm that receives the electrical parameter and the applied sinusoidal current for each motor coil to calculate a target current vector based on the electrical parameter and the applied sinusoidal current for each motor coil, and for dynamically adjusting (140) for each motor coil the sinusoidal current applied to that motor coil based on the target current vector. The control module (330) may comprise a microchip with embedded software for executing the feedback-based control algorithm.

FIG. 2, which shows a schematic diagram of a motor control device (300) for controlling a motor (200) comprising a rotor (210) and a stator (220), the stator (220) comprising a plurality of coils (221) which are isolated from each other. The motor control device (300) includes a current controller (310) configured for applying (110) a sinusoidal current to every motor coil, wherein the sinusoidal is dynamically adjustable. A feedback module (320) is configured for obtaining (120) an electrical parameter for each motor coil, wherein for each motor coil the electrical parameter is an average voltage over the coil or an instantaneous voltage over the coil. In embodiments of the present invention the feedback module (320) may be configured for obtaining the average voltage by averaging the voltage over a modulation cycle when the current is applied by modulation. This provides an effective way to measure the coil voltage. A control module (330) is configured for executing a feedback-based vector control algorithm that receives the electrical parameter and the applied sinusoidal current for each motor coil to calculate a target current vector based on the electrical parameter and the applied sinusoidal current for each motor coil, and for dynamically adjusting (140) for each motor coil the sinusoidal current applied to that motor coil based on the target current vector. In embodiments of the present invention the control module (330) may be furthermore configured for estimating the rotor position based on the calculated target current vector and the obtained voltage and using the estimated rotor position for converting the target current vector into target current values for each coil (221). Incorporating rotor position estimation enhances the dynamic performance of the motor control. In embodiments of the present invention the control module (330) may use predefined motor parameters for calculating the target current vector. Leveraging motor specifications enables more precise current control. In embodiments of the present invention the control module (330) may be configured for dynamically adjusting the amplitude, and/or the phase, and/or the frequency of the sinusoidal current based on the target current vector. This allows the current to be optimized in real-time for the desired motor operation. The motor control device (300) may further comprise a user interface for setting desired operational states.

In the third aspect, the present invention relates to a motor control system (400), the motor control system (400) comprising:

- a motor (200) comprising a rotor (210) and a stator (220), the stator (220) comprising a plurality of coils (221) which are isolated from each other,
- and a motor control device (300) according to any embodiments of the second aspect.

FIG. 2 also shows a motor control system (400) comprising the motor (200) and the motor control device (300). As will be illustrated in the examples below, the motor may for example be a stepper motor, a bipolar stepper motor, a brushless DC motor, or a 3-phase brushless DC motor.

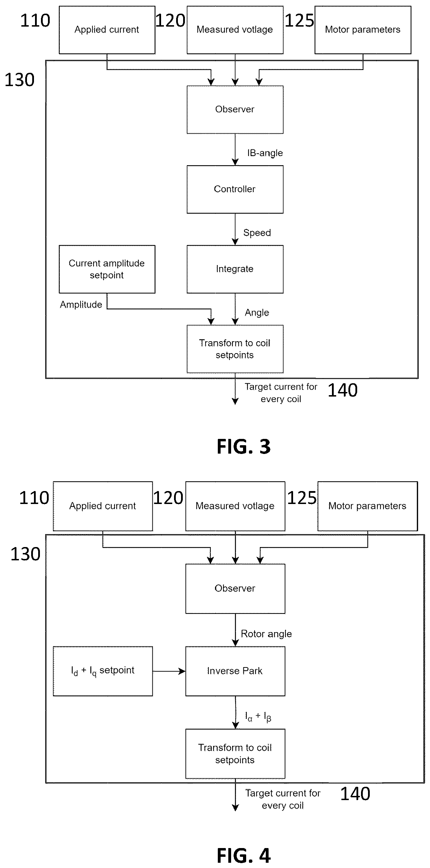

FIG. 3 shows an exemplary flow chart illustrating a first exemplary method how a target current vector can be obtained utilizing a feedback-based vector control algorithm in accordance with embodiments of the present invention. The angle and amplitude of the target current is known since it is the output of the FOC algorithm. A dynamically adjustable sinusoidal current is applied (110) to every motor coil. Also known are the obtained (120) coil voltages and the predefined (125) motor parameters coil resistance R and inductance L.

The exemplary method of the present invention illustrated in FIG. 3 utilizes (130) a feedback-based vector control algorithm that receives these values for determining the target current vector. In this exemplary embodiment of the present invention the feedback-based vector control algorithm uses the applied (110) current, the obtained (120) voltage (e.g. by measuring), and the predefined (125) motor parameters for obtaining the IB angle (observer step), the IB-angle is used for obtaining the speed (controller step), and the speed is used for obtaining the angle of the target current vector (integrate step). In embodiments of the present invention the desired amplitude of the current (i.e. the current amplitude setpoint) and the angle of the target current vector are transformed into a target current for every coil. Thus, a feedback-based vector control algorithm is utilized (130) that receives the electrical parameter and the applied sinusoidal current for each motor coil to calculate the target current vector. The sinusoidal current applied (110) to each motor coil is dynamically adjusted (140) based on the target current vector.

In a first stage of this exemplary method the angle between the back electro magnetic force (BEMF) and the current vector is calculated using an observer.

The obtained coil voltages are Clarke transformed to alpha-beta coordinates. How this transformation is done depends on the configuration of the motor coils.

Below are examples of a 4 phase bipolar stepper and a 3 phase BLDC motor.

In embodiments of the present invention the obtained coil voltages are transformed from cartesian to polar coordinates to obtain the voltage angle LV and peak voltage $V_{pk}$.

$$\angle V = atan2\left(V_\beta, V_\alpha\right)$$

$$V_{pk} = \sqrt{V_\alpha^2 + V_\beta^2}$$

The angle between the voltage and current vector IV can be calculated using the current phase and amplitude which are known since they have been set in the previous iteration.

$$IV = \angle V - \angle I$$

The voltage created by current going through the phase resistance $V_R$ is calculated:

$$V_R = I_{pk}R$$

The voltage created by current through the phase inductance $V_{Zy}$ is calculated:

$$V_{Zy} = I_{pk}L\omega$$

In this equation ω is the (estimated) speed of the rotor in rad/s.
The voltage is mapped onto the current using the IV-angle to obtain $V_{Ix}$ and $V_{Iy}$.

$$V_{Ix} = V_{pk}\cos\left(IV\right)$$

$$V_{Iy} = V_{pk}\sin\left(IV\right)$$

Knowing the current mapped voltage and current, the current mapped BEMF is calculated:

$$B_{Ix} = V_{Ix} - V_R$$

$$B_{Iy} = V_{Iy} - V_{Zy}$$

The angle between the BEMF and current vector IB is calculated:

$$IB = atan2(B_{Iy}, B_{Ix})$$

As will be explained in the next example this IB-angle can be used to calculate the rotor angle. In the current example the IB-angle is immediately used as input of the controller. The target IB-angle is typically close to zero and the output of the controller is the speed of the requested current vector, which is integrated to become the angle of the requested current vector. In embodiments of the present invention a feedback module may pass the speed from the current controller to the control module. The feedback module may for example be an interface on the current controller which interfaces with the control module.

The angle and amplitude of the target current vector is transformed to its according current target values for every independent coil (221). This transformation is dependent on the configuration of the coils of the motor. Some examples will be given below.

FIG. 4, which shows an exemplary flow chart illustrating a second exemplary method how a target current vector can be obtained utilizing (130) a feedback-based vector control algorithm which uses the applied (110) current, the obtained (120) voltage (e.g. by measuring), and the predefined (125) motor parameters in accordance with embodiments of the present invention. Since the output of this example consists of the currents in alpha-beta coordinates, a polar transformation of the current targets is performed to obtain the current angle $\angle I$ and peak current $I_{pk}$.

$$\angle I = atan2(I_\beta, I_\alpha)$$

$$I_{pk} = \sqrt{I_\alpha^2 + I_\beta^2}$$

The calculation up until the IB-angle is performed in the same manner as in FIG. 3 (observer step). The rotor angle $\theta$ is then calculated using the IB-angle, current angle $\angle I$, and a 90° offset (additionally part in the observer step of FIG. 4).

$$\theta = IB + \angle I - 90°$$

It is possible to continue using this raw calculated rotor angle or to filter this result in case desired.

The inverse Park transformation is applied on the direct and quadrature current targets ($I_d+I_q$ setpoint) using the rotor angle $\theta$, resulting in the alpha-beta currents (Inverse Park step). These alpha-beta currents are transformed into their according current target values for every independent coil (221). How this transformation (transformation to coil setpoints step) is performed depends on the configuration of the motor coils. The sinusoidal current applied (110) to each motor coil is dynamically adjusted (140) based on the target current vector.

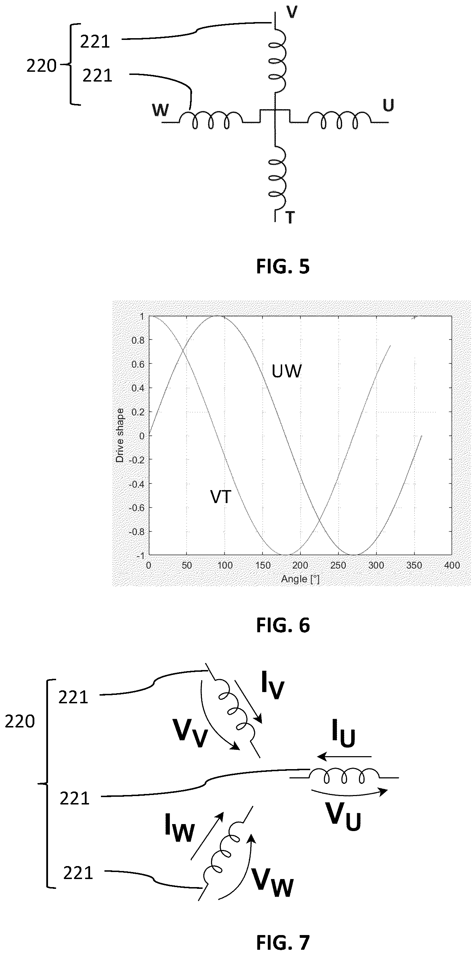

FIG. 5 shows a schematic drawing of a bipolar stepper motor which can be controlled using a method (100) or device (300) in accordance with embodiments of the present invention. The stator configuration shows coils U, V, W, and T. FIG. 6 shows the sinusoidal current through the coils of the bipolar stepper motor of FIG. 5 using a current controller (310) of a motor control device (300) in accordance with embodiments of the present invention. A sinusoidal current with a requested amplitude and frequency is applied through coils U and W. Another sinusoidal current with a requested amplitude and frequency is applied through coils V and T, phase shifted by 90 electrical degrees compared to the sinusoidal current through coils U and W.

In an exemplary embodiment of the present invention, a current controller (310) applies a sinusoidal current signal with a known requested amplitude and frequency between phases U and W of a bipolar stepper. The current controller (310) applies (110) another sinusoidal current signal with a known requested amplitude and frequency between phases V and T of the bipolar stepper, but this second signal is phase shifted by 90 electrical degrees compared to the first signal between U and W. The current controller may have a different current driver for each phase.

In the next step, the average or instantaneous voltage (i.e. the electrical parameter) between phases U and W and between phases V and T needs to be obtained (120). When the voltage has is modulated, the average voltage over a full modulation cycle needs to be obtained (120). When the voltage is analog, the instantaneous voltage needs to be obtained (120). This is achieved using a feedback module (320). The feedback module may measure the average voltage or instantaneous voltage or may obtain the average voltage or instantaneous voltage from the current controller (310). It is possible that the current controller (310) comprises the functionality of the feedback module (320), and informs about the voltage or the duty cycle.

After obtaining (120) the voltage values, the Clarke transformation of the voltages is calculated:

$$V_\alpha = V_U - V_W$$

$$V_\beta = V_V - V_T$$

The Clarke transformed voltages can be used in a FOC algorithm, which calculates the optimal frequency, period or angle of the applied current signals.

When using the FOC algorithm of FIG. 3, the target alpha-beta current can immediately be used as coil current targets. When using the FOC algorithm of FIG. 4, the coil current targets can be calculated as follows:

$$I_\alpha = I_{UW} = I_{pk}\cos(\angle I)$$

$$I_\beta = I_{VT} = I_{pk}\sin(\angle I)$$

In embodiments of the present invention the motor (200) may be a brushless DC motor. The vector control algorithm can optimize the performance of BLDC motors. In embodiments of the present invention the motor (200) may be a 3-phase brushless DC motor. FIG. 7 shows a schematic drawing of a BLDC motor which can be controlled using a method (100) or device (300) in accordance with embodiments of the present invention. The 3 phases U, V, and W are decoupled from each other.

In embodiments of the present invention a current controller (310) is configured for applying 120° phase shifted sine current signals on 3 phases. Again, the duty cycle or voltage can be read out or measured by a feedback module (320) and Clarke transformed:

$$V_\alpha = V_U$$

$$V_\beta = \frac{V_V - V_W}{\sqrt{3}}$$

These Clarke transformed voltages can be used in a FOC algorithm in a control module (330). When using the FOC algorithm of FIG. 4, the coil current targets can be calculated by performing the inverse Clarke transformation. When using the FOC algorithm of FIG. 3, the coil current targets can be calculated as follows:

$$I_U = I_{pk}\cos\left(\angle I\right)$$

$$I_V = I_{pk}\cos\left(\angle I - 120°\right)$$

$$I_W = I_{pk}\cos\left(\angle I + 120°\right)$$

In embodiments of the present invention the coils of the motor are current-controlled by hardware logic in a microchip to regulate the sine current dynamically on each coil.

In embodiments of the present invention the aim is to convert open-loop hardware current-controlled steppers into a closed-loop field-oriented control (FOC) drive by obtaining the resulting coil voltages and regulating the sine current frequency and/or amplitude and/or phase.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A method (100) for controlling a motor (200) comprising a rotor (210) and a stator (220), the stator (220) comprising a plurality of coils (221) which are isolated from each other, the method (100) comprising:

   - applying (110) a sinusoidal current to every motor coil, wherein the sinusoidal is dynamically adjustable;
   - obtaining (120) an electrical parameter for each motor coil, wherein for each motor coil the electrical parameter is an average voltage over the coil or an instantaneous voltage over the coil;
   - utilizing (130) a feedback-based vector control algorithm that receives the electrical parameter and the applied sinusoidal current for each motor coil to calculate a target current vector, wherein the target current vector is determined based on the electrical parameter and the applied sinusoidal current for each motor coil;

   - dynamically adjusting (140) for each motor coil the sinusoidal current applied to that motor coil based on the target current vector.

2. The method (100) according to claim 1, wherein the average voltage is obtained (120) by measuring over a modulation cycle when the current is applied (110) by modulation.

3. The method (100) according to any of the previous claims, further comprising the step of estimating (135) the rotor position based on the calculated target current vector and the obtained voltage and using the estimated rotor position for converting the target current vector into target current values for each coil (221).

4. The method (100) according to any of the previous claims, wherein the feedback-based vector control algorithm, furthermore, uses predefined motor parameters for calculating the target current vector.

5. The method (100) according to any of the previous claims, wherein dynamically adjusting (140) the sinusoidal current for each motor coil comprises dynamically adjusting the amplitude, and/or the phase, and/or the frequency of the sinusoidal current based on the target current vector.

6. A motor control device (300) for controlling a motor (200) comprising a rotor (210) and a stator (220), the stator (220) comprising a plurality of coils (221) which are isolated from each other comprising:

   - a current controller (310) configured for applying (110) a sinusoidal current to every motor coil, wherein the sinusoidal current is dynamically adjustable;
   - a feedback module (320) configured for obtaining (120) an electrical parameter for each motor coil, wherein for each motor coil the electrical parameter is an average voltage over the coil or an instantaneous voltage over the coil;
   - a control module (330) configured for executing a feedback-based vector control algorithm that receives the electrical parameter and the applied sinusoidal current for each motor coil to calculate a target current vector based on the electrical parameter and the applied sinusoidal current for each motor coil, and for dynamically adjusting (140) for each motor coil the sinusoidal current applied to that motor coil based on the target current vector.

7. A motor control device (300) according to claim 6 wherein the feedback module (320) is configured for obtaining the average voltage by averaging the voltage over a modulation cycle when the current is applied (110) by modulation.

8. A motor control device (300) according to any of the claims 6 or 7 wherein the control module (330) is, furthermore, configured for estimating the rotor position based on the calculated target current vector and the obtained voltage and using the estimated rotor position for converting the target current vector into target current values for each coil (221).

9. A motor control device (300) according to any of the claims 6 to 8 wherein the control module (330) uses predefined motor parameters are for calculating the target current vector.

10. A motor control device (300) according to any of the claims 6 to 9 wherein the control module (330) is configured for dynamically adjusting the amplitude, and/or the phase, and/or the frequency of the sinusoidal current based on the target current vector.

11. A motor control system (400), the motor control system comprising:

  - a motor (200) comprising a rotor (210) and a stator (220), the stator (220) comprising a plurality of coils (221) which are isolated from each other,
  - and a motor control device (300) according to any of the claims 6 to 10.

12. A motor control system (400) according to claim 11 wherein the motor (200) is a stepper motor.

13. A motor control system (400) according to claim 12 wherein the motor (200) is a bipolar stepper motor.

14. A motor control system (400) according to claim 11 wherein the motor (200) is a brushless DC motor.

15. A motor control system (400) according to claim 14 wherein the motor (200) is a 3-phase brushless DC motor.

100

| Apply current to coils | 110 |

| Measure coil voltages | 120 |

| Vector control algorithm | 130 |

| Estim. angle | 135 |

| Adjust current | 140 |

**FIG. 1**

400

300

200

| 310 | Current contr. |
| 320 | Feedb. mod. |
| 330 | Contr. mod. |

210

221  221

220

**FIG. 2**

**FIG. 3**

**FIG. 4**

**FIG. 5**

**FIG. 6**

**FIG. 7**

Europäisches
Patentamt

European
Patent Office

Office européen
des brevets

# EUROPEAN SEARCH REPORT

**Application Number**

EP 24 17 5697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 736 234 B1 (WISCONSIN ALUMNI RES FOUND [US]) 5 March 2003 (2003-03-05) * abstract; claims 1-4; figures 1-4 * | 1-15 | INV. H02P6/18 H02P6/08 H02P8/12 |
| X | WO 2020/198629 A1 (MAGNETIC PUMPING SOLUTIONS LLC [US] ET AL.) 1 October 2020 (2020-10-01) | 1,3-6, 8-15 | H02P21/00 H02P21/13 H02P21/22 |
| A | * abstract; claims 1-4; figures 12-14 * | 2,7 | |
| A | DE VIAENE JASPER ET AL: "Energy-efficient sensorless load angle control of a BLDC motor using sinusoidal currents", IET ELECTRIC POWER APPLICATIONS, IET, UK, vol. 12, no. 9, 1 November 2018 (2018-11-01), pages 1378-1389, XP006070341, ISSN: 1751-8660, DOI: 10.1049/IET-EPA.2018.5059 * abstract; figures 9, 10 * | 1-15 | |
| A | Topal M ET AL: "SENSORLESS SPEED CONTROL OF A BLDC MOTOR USING IMPROVED SLIDING MODE OBSERVER TECHNIQUE", IJTPE Journal, 1 March 2019 (2019-03-01), pages 1-9, XP093213954, Retrieved from the Internet: URL:https://www.iotpe.com/IJTPE/IJTPE-2019/IJTPE-Issue38-Vol11-No1-Mar2019/1-IJTPE-Issue38-Vol11-No1-Mar2019-pp1-9.pdf * abstract; figures 8, 9 * | 1-15 | **TECHNICAL FIELDS SEARCHED (IPC)** H02P |

-/--

The present search report has been drawn up for all claims

| Place of search | Date of completion of the search | Examiner |
|---|---|---|
| Munich | 14 October 2024 | Koteich, Mohamad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

**EP 24 17 5697**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Li Zhenguo ET AL: "Phase Back EMF Space Vector Oriented Control of Brushless DC Motor for Torque Ripple Minimization", 2016 IEEE 8th International Power Electronics and Motion Control Conference (IPEMC-ECCE Asia), 22 May 2016 (2016-05-22), pages 1-7, XP093213986, Retrieved from the Internet: URL:https://ieeexplore.ieee.org/stampPDF/g etPDF.jsp?tp=&arnumber=7512702&ref=aHR0cHM 6Ly9pZWVleHBsb3JlLmllZWUub3JnL2Fj3RyYWN0L 2RvY3VtZW50Lzc1MTI3MDI= * the whole document * ----- | 1-15 | |

| | | |
|---|---|---|
| | | TECHNICAL FIELDS SEARCHED (IPC) |

The present search report has been drawn up for all claims

| Place of search | Date of completion of the search | Examiner |
|---|---|---|
| Munich | 14 October 2024 | Koteich, Mohamad |

EPO FORM 1503 03.82 (P04C01)

## ANNEX TO THE EUROPEAN SEARCH REPORT
## ON EUROPEAN PATENT APPLICATION NO.

EP 24 17 5697

14-10-2024

| Patent document cited in search report | | Publication date | Patent family member(s) | | Publication date |
|---|---|---|---|---|---|
| EP 0736234 | B1 | 05-03-2003 | CA | 2179776 A1 | 29-06-1995 |
| | | | DE | 69432226 T2 | 22-01-2004 |
| | | | EP | 0736234 A1 | 09-10-1996 |
| | | | JP | 3720357 B2 | 24-11-2005 |
| | | | JP | 3762915 B2 | 05-04-2006 |
| | | | JP | H09507376 A | 22-07-1997 |
| | | | JP | 2004007988 A | 08-01-2004 |
| | | | KR | 100391220 B1 | 28-11-2003 |
| | | | US | 5559419 A | 24-09-1996 |
| | | | WO | 9517780 A1 | 29-06-1995 |
| WO 2020198629 | A1 | 01-10-2020 | US | 2022181999 A1 | 09-06-2022 |
| | | | WO | 2020198629 A1 | 01-10-2020 |